(19)

Europäisches
Patentamt
European
Patent Office
Office européen
des brevets

(11) **EP 2 835 177 A1**

(12) **EUROPEAN PATENT APPLICATION**

(43) Date of publication:
**11.02.2015 Bulletin 2015/07**

(21) Application number: **13179382.0**

(22) Date of filing: **06.08.2013**

(51) Int Cl.:
*B01J 37/03* (2006.01)     *B01J 37/04* (2006.01)
*B01J 37/16* (2006.01)     *B01J 23/889* (2006.01)
*B01J 21/18* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Bayer Technology Services GmbH
51368 Leverkusen (DE)**

(72) Inventors:
• **Dr. Lolli, Giulio
51069 Köln (DE)**

• **Prof. Dr. Mleczko, Leslaw
41542 Dormagen (DE)**
• **Dr. Schlüter, Oliver Felix-Karl
51381 Leverkusen (DE)**
• **Qiang, Niu
51061 Köln (DE)**

(74) Representative: **BIP Patents
c/o Bayer Intellectual Property GmbH
Creative Campus Monheim
Alfred-Nobel-Straße 10
40789 Monheim (DE)**

(54) **Method for preparing Co-Mn on carbon catalysts and their use in carbon nanotube synthesis**

(57) The invention relates to a method of preparing carbon based catalysts and their use in synthesizing carbon nanotubes. In this invention, carbon black was used to prepare the catalyst for the synthesis of carbon nanotubes (CNTs). By pre-treatment, the structure of carbon black was broken into pieces, which then were used as spacing materials to mix with metal precursors to form a suspension. Through coprecipitation, metals precipitate and form the solid catalyst with carbon black distributed in it. The final catalysts were obtained after washing, drying, calcination and sieving of the solid mixture. Using this catalyst, a high carbon content, easily dispersible carbon nanotubes can be synthesized via chemical vapour deposition (CVD).

EP 2 835 177 A1

## Description

## Technical Field

The invention relates to a method for producing carbon-based catalysts with high catalysis activity for the synthesis of carbon nanotubes (CNTs).

The work on this invention has received funding from the European Communities Seventh Framework Programme (FP7/2007-2013) under grant agreement no. 238363.

## Introduction

Catalysts made of metal oxides are the most common ones used for carbon nanotube (CNT) synthesis (De Jong et. al. Catal. Rev. -Sci. Eng., 42(4), 481-510, 2000), e.g. aluminium oxide and magnesium oxide are usually employed as supports or diluting materials. In WO 2007/093337 A2, cobalt, manganese, aluminium and magnesium were used to prepare a catalyst by co-precipitation. However, the aluminium oxide and magnesium oxide often worsen the performance of CNTs for further applications as unwanted residuals.

To remove the metal residuals, usually a large amount of acids are employed to wash the raw CNT materials, which hugely increases the costs for CNTs producers. On the other hand, the acids sometimes alter the properties of the CNTs, which are no longer as good as they are supposed to be.

Another way to avoid residual metals is to prepare a catalyst either without aluminium oxide and magnesium oxide or with other substituents instead. However, the high yield of CNTs cannot be reached in that case, which is not acceptable for CNT users and producers. From the catalysis point of view, the effect of aluminium oxide and magnesium oxide is still not fully understood, since the interactions among those constituents are extremely complex.

In US 2008/0233402 A1, carbon black was employed to prepare a mixture with CNTs. However, for CNTs users, carbon black should not be one of the main constituents. Moreover, there are no optimized parameters disclosed for the synthesis of high yield and therefore high carbon content CNTs, which are necessary as well as aluminium oxide and magnesium oxide free.

Carbon black is highly available in the market at a relatively low price. But it is not suitable for preparing catalysts for carbon nanotube (CNT) synthesis because of its micro porous nature. Meanwhile, it is difficult to get a controllable, high metal content, which is necessary for a high yield CNT synthesis, in a carbon based catalyst due to the properties of most commonly used impregnation methods. In this invention, treated carbon black was used to prepare the carbon based catalyst. By pre-disaggregation, the structure of carbon black was disrupted to be suitable as a component of a catalyst. At the same time, the carbon black is very well dispersed in solution with metal precursors to form a suspension. Subsequently, the metals precipitate with carbon black dispersed in it to form a solid mixture. The mixture is then dried, calcined and sieved to form the final carbon-based catalysts. Said carbon-based catalyst thus prepared is active in catalyzing the CNT synthesis via the chemical vapour deposition (CVD) method.

## Figures

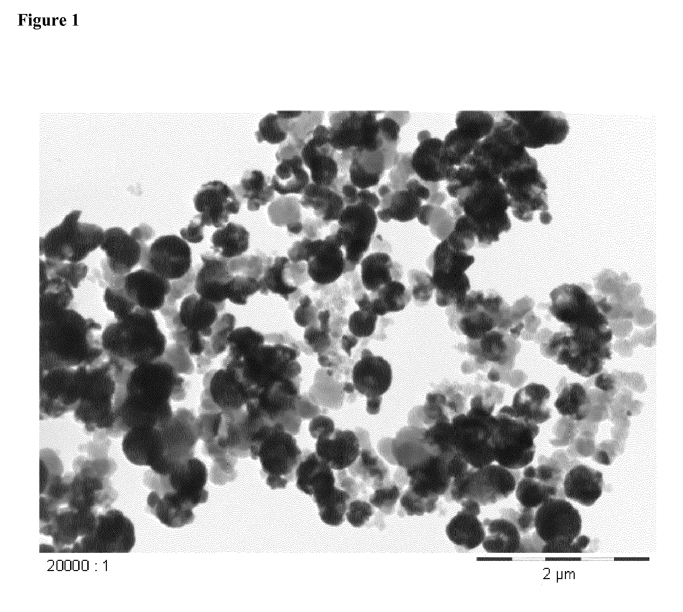

Fig. 1 is the TEM image of a catalyst prepared with CSX 691, which was disaggregated by an ultrasonic tip at the beginning of the experiment. The "black" balls are metal oxides, the "grey" parts are carbon black.

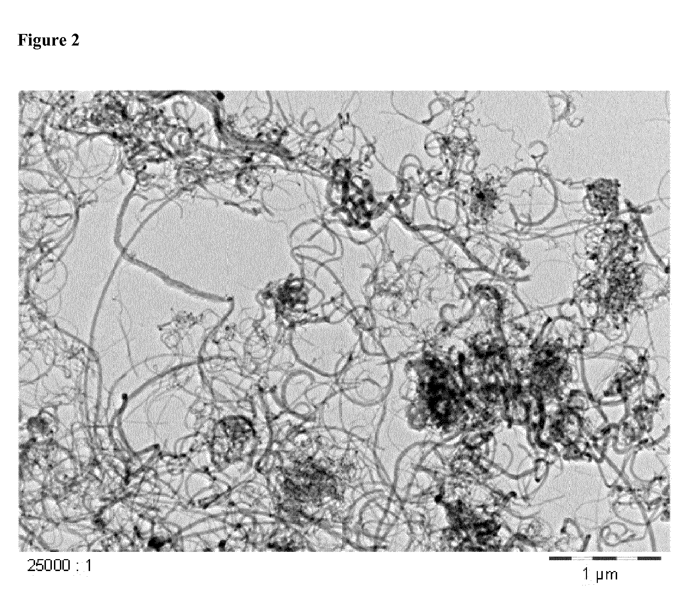

Fig.2 is the TEM image of carbon nanotubes obtained by the catalysts based on CSX 691. The yield of this sample is 76 g CNT/ g Catalyst in 30 min.

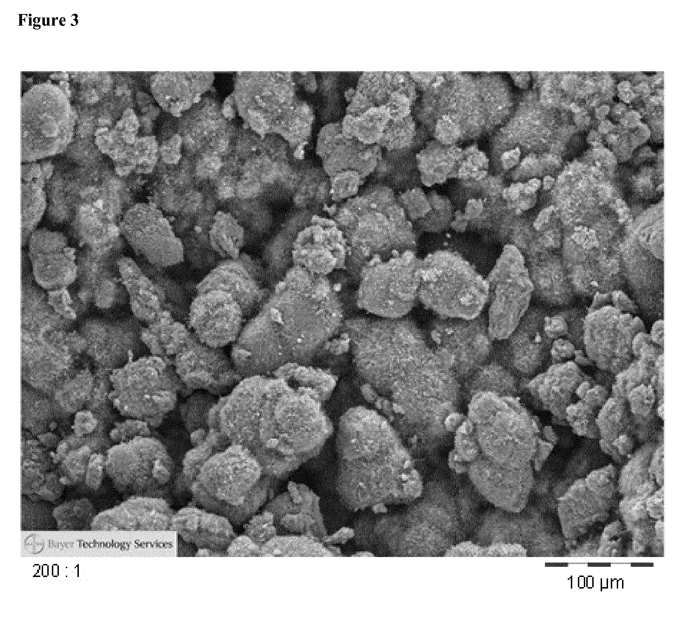

Fig.3 is the SEM image of the carbon nanotubes obtained by the catalysts based on CSX 691, showing a sub-agglomerate morphology.

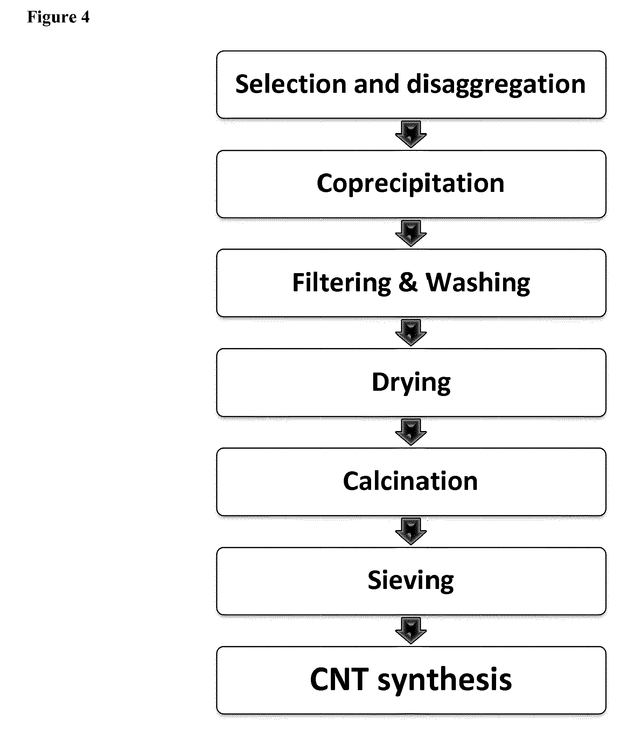

Fig. 4 is the flow chart of the preparation of the catalysts.

## Description

Given the major disadvantages of the above methods known in the art, which usually lead to residual metal compounds, such as metal oxides, and are therefore characterized by a low yield and therefore low carbon content CNTs, it has been the problem of the invention to provide a solution to synthesize a carbon-based catalyst, and subsequently, carbon nanotubes (CNTs), with as few types of metal residuals as possible, while simultaneously keeping a high yield, which eliminates the risk of degradation for further applications.

The invention has solved said problem by providing a method for producing a carbon-based catalyst for the synthesis of carbon nanotubes comprising the steps of:

(a) providing and pre-treating carbon black,

(b) co-precipitating, and

(c) filtering, washing, drying, calcination and sieving, thereby generating the carbon-based catalyst.

In a further embodiment of the invention, the method can further comprise the step of

(d) synthesizing carbon nanotubes (CNTs) by using the carbon-based catalyst generated in step (c).

Nodules, also known as primary particles, are the basic units of carbon black. However, nodules usually aggregate and cannot be broken down easily into the primary particles. These aggregates then agglomerate and form the final structure of carbon black. The structure of carbon black is not suitable to be used as part of catalysts for CNT synthesis due to its microporous property. Therefore, the CNTs produced by catalysts containing carbon black as catalyst component usually do not show high yield.

If the carbon black with big nodules, which is bigger than 300 nm for instance, is used instead, the tight structure of carbon black is no longer present. However, the surface area of such carbon black is so limited that it can no longer work as a good spacing material for the catalyst. In this case, high yield will not be achieved either.

In the context of the present invention, carbon blacks with nodule size ranging from 20 nm to 300 nm were selected as candidates, as they can be disaggregated to smaller pieces and shows proper surface area. Thus, in one embodiment of the method, the carbon black provided and pre-treated in step (a) can have an average nodule size of from 20 nm to 300 nm.

The use of proper carbon black plays a key role in further preparation. However, the treatment of carbon black is the key step to make the best use of the treated carbon black. Usually, a sonication bath can be employed, when carbon black was used to prepare a catalyst. But carbon black keeps its structure in that case, and only a very small amount of carbon black can be dispersed, which limits the preparation of the catalysts.

In the context of the present invention, pre-disaggregation of carbon black was found to be beneficial, where the structure of carbon black was broken down into pieces by more powerful tools like sonication tips or shear mixer, etc., which later used as good spacing materials for preparing catalyst. Thus, in a further embodiment of the method of the invention, the pre-treating in step (a) comprises pre-treating of carbon black by either an ultrasonic tip or a high shear mixer to break the carbon black into smaller pieces.

A co-precipitation method was adopted here to prepare catalysts. Instead of using aluminium and magnesium as diluting materials, carbon black pre-treated in step (a) was used, preferably with active metal precursors. Thus, in a further embodiment of the method of the invention, step (b) comprises co-precipitating one or more active metal salts and one or more promoting metal salts with treated carbon black as spacing materials in the presence of a precipitation agent.

In a further embodiment of the invention, said one or more active metal salts can be selected from the group consisting of iron salts, cobalt salts, nickel salts, copper salts, molybdenum salts and manganese salts (i.e. Fe-, Co-, Ni-, Cu-, Mo- and Mn-salts).

In a particularly preferred embodiment of the invention the one or more active metal salts can be selected from the group consisting of $Co(NO_3)_2$, $CoSO_4$, $Co(CH_3COO)_2$, $CoCl_2$, $Co[CH_3COCH=C(O)CH_3]_3$ (Cobalt(III) acetylacetonate), or $Co[CH_3COCH=C(O)CH_3]_2$ (Cobalt(II) acetylacetonate), $(NH_4)_2Co(SO_4)_2 \cdot 6H_2O$, $[C_6H_5COCH=C(O-)CH_3]_2Co$, $CoBr_2$, $CoF_2$, $Co_3(PO_4)_2$, $Co(BF_4)_2 \cdot 6H_2O$, $Co(SCN)_2$, $C_4H_{16}Cl_3CoN_4$, $[Co(NH_3)_6]Cl_3$ and $[Co(NH_3)_5]Cl_2$.

In a further embodiment of the invention the one or more promoting metal salts can be selected from the group consisting of copper salts, molybdenum salts, manganese salts, lithium salts, sodium salts, potassium salts, aluminium salts, magnesium salts, silica salts, zirconium salts, titanium salts, chromium salts, tungsten salts and vanadium salts (i.e. Cu-, Mo, Mn-, Li-, Na-, K-, Al-, Mg-, Si-, Zr-, Ti-, Cr-, W- and V-salts).

In a particularly preferred embodiment of the invention the one or more promoting metal salts can be selected from the group consisting of $Mn(NO_3)_2$, $MnSO_4$, $Mn(CH_3COO)_2$, $MnCl_2$, $Mn[CH_3COCH=C(O)CH_3]_3$, $Mn[CH_3COCH=C(O)CH_3]_2$, $MnBr_2$, $MnF_2$, $MnF_3$, $(HCO_2)_2Mn$, and $Mn(ClO_4)_2$.

In a preferred embodiment of the invention, the one or more active metal salts weigh from 20 % to 400 wt% of the mass of carbon black.

Precipitation agents, such as urea can be used to take the advantage of homogeneous precipitation. The amount of urea plays a key role in this step. To determine how much urea should be used is not easy due to the complex kinetic and thermodynamic issues. When the theoretical minimum amount of urea is employed, the precipitation reaction cannot be finished even after a long duration due to the fact that there are always some urea cannot fully be disassociated; When too much urea is employed, the precipitation process runs much faster but the crystalline of the precipitates will be affected; Moreover, some precipitates, e.g. $Co(OH)_2$, dissolve again due to the formation of metal complex. Thus, in a preferred embodiment of the invention, the precipitation agent is selected from group consisting of ammonium carbonate, ammonium hydroxide, urea, alkali or alkaline earth carbonates and alkali or alkaline earth hydroxides.

In the context of the invention, 3 to 15 times of the theoretical amount of precipitation agent, such as urea, can be determined as the optimized parameter, which can result in a reasonable reaction duration from 20 to 30 hours.

To determine the proper duration for co-precipitation, a series of experiments was carried out, showing that typically 24 to 30 hours can be taken as a proper duration for co-precipitation. Shorter or longer duration times would lead to less active catalysts.

In a preferred embodiment of the invention, the drying in step (c) is performed at a temperature ranging from 25 °C to 200 °C.

After washing, filtering and drying in step (c) of the method of the invention, calcination is the crucial step to form the catalysis active carbon-based catalyst, wherein the precipitates are converted into oxides which are more active in CNT synthesis. Due to the presence of carbon black, the calcination temperature can be limited in air, usually below 300 °C. In that case, catalysts are not as active as the ones calcined in inert gas at higher temperature. However, even then, the yield can still reach 56 g CNT/g catalyst in 30 min, which gives a carbon content higher than 98% without washing. With optimized calcination in inert gas, the yield goes up to 76 g CNT/ g catalyst in 30 min. Therefore, an optimized calcination temperature in terms of yield be under inert atmosphere can range from 300 °C to 700 °C.

Thus, in a further embodiment of the method of the invention, in step (c) the calcination is performed at a temperature ranging from 200 °C to 300 °C in air, or at a temperature from 300 °C to 700 °C in inert gas atmosphere.

The yield of CNTs is calculated by the following equation:

$$Yield\ (\%) = \frac{Mass\ of\ product - Mass\ of\ catalyst}{Mass\ of\ catalyst} * 100\%$$

The sieving of the calcined catalyst in step (c) of the method of the invention helps to improve the yield and quality of the carbon-based catalyst and therefore of the CNTs that can be made by using such carbon-based catalyst. When the sieved carbon-based catalyst is smaller than 32 $\mu$m, then some quite substantial chunk forms after CNT synthesis; therefore the catalysts may best be in a form bigger than 32 $\mu$m, as long as the mass diffusion is not badly affected.

In a further embodiment of the method of the invention, step (d) can comprises the use of the carbon-based catalyst for synthesising carbon nanotubes (CNTs) by chemical vapour deposition (CVD).

The invention also provides the carbon-based catalyst obtainable by the above-described method of the invention.

The invention further provides the use of the carbon-based catalyst obtainable by the method of the invention for synthesizing carbon nanotubes (CNTs).

In a further embodiment of the invention, the use of the carbon-based catalyst for synthesizing carbon nanotubes (CNTs) can comprise synthesizing CNTs by chemical vapour deposition (CVD).

It will be apparent to those skilled in the art that various modifications can be made to the methods and recombinant host strains of the invention. Thus, it is intended that the present invention covers such modifications and variations, provided they come within the scope of the appended claims and their equivalents.

The invention is further illustrated below more clearly in several examples. However, it is apparent to those skilled in the art that the subject matter of the invention is not restricted thereto.

**Examples**

**Example 1: ultrasonic tip as disaggregation tool**

31.4 g $Co(NO_3)_2.6H_2O$, 27.1 g $Mn(NO_3)_2.4H_2O$ were solved in 1 liter deionized water and then stirred by overhead stirrer. 9 g carbon black (CSX 691) was added into the solution. The mixture was then sonicated by ultrasonic tip at 360 watt for 20 min. After this pretreatment, the solution was transferred to a flask to mix with 155.8 g urea. Then the solution was heated up to 90 °C with vigorous stirring and kept for 30 hours. The solution then was cooled, filtered and washed by copious water. Then the filtering cake was dried, calcined and sieved to form the catalyst for synthesis of carbon nanotubes.

**Example 2: High shear mixer as disaggregation tool**

8.9 g carbon black (CSX 691) was added into 1 liter deionized water and then stirred by high shear mixer with 7000 rpm for 5 min. Then 31.4 g $Co(NO_3)_2.6H_2O$, 27.1 g $Mn(NO_3)_2.4H_2O$ were solved in the carbon black containing suspension. The mixture was then transferred to a flask to mix with 155.8 g urea. Then the solution was heated up to 90 °C with vigorous stirring and kept for 30 hours. The solution then was cooled, filtered and washed by copious water. Then the filtering cake was dried, calcined and sieved to form the catalyst for synthesis of carbon nanotubes.

**Example 3: N990 as selected carbon black**

31.4 g $Co(NO_3)_2.6H_2O$, 27.1 g $Mn(NO_3)_2.4H_2O$ were solved in 1 liter deionized water and then stirred by overhead stirrer. 9 g carbon black (CSX 691) was added into the solution. The mixture was then sonicated by ultrasonic tip at 360 watt for 20 min. After this pretreatment, the solution was transferred to a flask to mix with 155.8 g urea. Then the solution was heated up to 90 °C with vigorous stirring and kept for 30 hours. The solution then was cooled, filtered and washed by copious water. Then the filtering cake was dried, calcined and sieved to form the catalyst for synthesis of carbon nanotubes.

**Example 4: CNT synthesis**

The catalyst described in example 1 was then used for the CNT synthesis. CNTs were grown in a fluidized bed reactor. A sample amount of 0.5 g catalyst was placed in the fluidized reactor. The CNT synthesis was under a gas mixture of 9 L/min $C_2H_4$ and 1 L/min $N_2$ for 30 min. After the reaction the sample was cooled and then taken from the reactor.

**Claims**

1. A method for producing a carbon-based catalyst for the synthesis of carbon nanotubes comprising the steps of:

   (a) providing and pre-treating carbon black,
   (b) co-precipitating, and
   (c) filtering, washing, drying, calcination and sieving, thereby generating the carbon-based catalyst.

2. The method of claim 1, further comprising the step of:

   (d) synthesizing carbon nanotubes by using the carbon-based catalyst generated in step (c).

3. The method according to claim 1 or claim 2, wherein the carbon black provided and pre-treated in step (a) has an average nodule size of from 20 nm to 300 nm.

4. The method according to claims 1 to 3, wherein step (a) comprises pre-treating of carbon black by either an ultrasonic tip or a high shear mixer to break the carbon black into smaller pieces.

5. The method according to claims 1 to 4, wherein step (b) comprises co-precipitating one or more active metal salts and one or more promoting metal salts with treated carbon black as spacing materials in the presence of a precipitation agent.

6. The method according to claim 5, wherein said one or more active metal salts are selected from the group consisting of iron salts, cobalt salts, nickel salts, copper salts, molybdenum salts and manganese salts (Fe-, Co-, Ni-, Cu-, Mo- and Mn-salts), wherein said one or more active metal salts are preferably selected from the group consisting of $Co(NP_3)_2$, $CoSP_4$, $Co(CH_3COO)_2$, $CoCl_2$, $Co[CH_3COCH=C(O)CH_3]_3$ (Cobalt(III) acetylacetonate), $Co[CH_3COCH=C(O)CH_3]_2$ (Cobalt(II) acetylacetonate), $(NH_4)_2Co(SO_4)_2 \cdot 6H_2O$, $[C_6H_5COCH=C(O)CH_3]_2Co$, $CoBr_2$, $CoF_2$, $Co_3(PO_4)_2$, $Co(BF_4)_2 \cdot 6H_2O$, $Co(SCN)_2$, $C_4H_{16}Cl_3CoN_4$, $[Co(NH_3)_6]Cl_3$, and $[Co(NH_3)_5]Cl_2$.

7. The method according to claim 5, wherein said one or more promoting metal salts are selected from the group consisting of copper salts, molybdenum salts, manganese salts, lithium salts, sodium salts, potassium salts, aluminium salts, magnesium salts, silica salts, zirconium salts, titanium salts, chromium salts, tungsten salts and vanadium salts (Cu-, Mo, Mn-, Li-, Na-, K-, Al-, Mg-, Si-, Zr-, Ti-, Cr-, W- and V-salts), wherein said one or more promoting metal salts preferably are selected from the group consisting of $Mn(NO_3)_2$, $MnSO_4$, $Mn(CH_3COO)_2$, $MnCl_2$ $Mn[CH_3COCH=C(O)CH_3]_3$ or $Mn[CH_3COCH=C(O)CH_3]_2$, $MnBr_2$, $MnF_2$, $MnF_3$, $(HCO_2)_2Mn$ and $Mn(ClO_4)_2$.

8. The method according to claims 5 or 6, wherein the active metal salts weigh from 20 % to 400 wt% of the mass of carbon black.

9. The method according to claims 5 to 8, wherein the precipitation agent is selected from group consisting of ammonium carbonate, ammonium hydroxide, urea, alkali or alkaline earth carbonates and alkali or alkaline earth hydroxides.

10. The method according to claims 5 to 9, wherein in step (c) the drying is performed at a temperature ranging from 25 °C to 200 °C.

11. The method according of claim 10, wherein in step (c) the calcination is performed at a temperature ranging from 200 °C to 300 °C in air, or at a temperature from 300 °C to 700 °C in inert gas atmosphere.

12. The method according to claims 2 to 11, wherein step (d) comprises the use of the carbon-based catalyst for synthesising carbon nanotubes by chemical vapour deposition.

13. Carbon-based catalyst obtainable by the method of Claims 1 and 3 to 12.

14. Use of the carbon-based catalyst of Claim 13 for synthesizing carbon nanotubes.

15. The use of Claim 14, wherein the synthesizing of carbon nanotubes is done by chemical vapour deposition.

Figure 1

20000 : 1                                          2 µm

Figure 2

25000 : 1                                                        1 µm

**Figure 3**

200 : 1

100 µm

Figure 4

Selection and disaggregation

Coprecipitation

Filtering & Washing

Drying

Calcination

Sieving

CNT synthesis

Europäisches
Patentamt

European
Patent Office

Office européen
des brevets

## EUROPEAN SEARCH REPORT

Application Number

EP 13 17 9382

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/097956 A1 (ENN SCIENCE & TECH DEV CO LTD [CN]; WAN XINHUA [CN]; ZHANG GUOTAO [CN]) 18 August 2011 (2011-08-18) * claims; examples * ----- | 1-13 | INV. B01J37/03 B01J37/04 B01J37/16 B01J23/889 B01J21/18 |
| X | BEZEMER G L ET AL: "Investigation of promoter effects of manganese oxide on carbon nanofiber-supported cobalt catalysts for Fischer-Tropsch synthesis", JOURNAL OF CATALYSIS, ACADEMIC PRESS, DULUTH, MN, US, vol. 237, no. 1, 1 January 2006 (2006-01-01), pages 152-161, XP024913130, ISSN: 0021-9517, DOI: 10.1016/J.JCAT.2005.10.031 [retrieved on 2006-01-01] * experimental section * ----- | 13 | |
| X | WO 2009/087040 A2 (STARCK H C GMBH [DE]; MEESE-MARKTSCHEFFEL JULIANE [DE]; OLBRICH ARMIN) 16 July 2009 (2009-07-16) * claims; examples * ----- | 14,15 | |
| X | DE 10 2006 007147 A1 (BAYER TECHNOLOGY SERVICES GMBH [DE]) 23 August 2007 (2007-08-23) * claims; examples * ----- | 14,15 | TECHNICAL FIELDS SEARCHED (IPC) B01J |
| A | DE 10 2005 032071 A1 (ZSW [DE]) 11 January 2007 (2007-01-11) ----- | 1-15 | |

-/--

The present search report has been drawn up for all claims

| Place of search | Date of completion of the search | Examiner |
|---|---|---|
| Munich | 13 January 2014 | de Cauwer, Robby |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 13 17 9382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Dissertation ET AL: "Synthesisandcharacterizationofcarbon-based catalystsforthegrowthoftailor-mademulti-walled carbonnanotubes", , 9 August 2013 (2013-08-09), XP055096066, Retrieved from the Internet: URL:http://www-brs.ub.ruhr-uni-bochum.de/netahtml/HSS/Diss/NiuQiang/diss.pdf [retrieved on 2014-01-13] ----- | | |

TECHNICAL FIELDS
SEARCHED      (IPC)

The present search report has been drawn up for all claims

| Place of search | Date of completion of the search | Examiner |
|---|---|---|
| Munich | 13 January 2014 | de Cauwer, Robby |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 13 17 9382

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2014

| Patent document cited in search report | | Publication date | Patent family member(s) | | Publication date |
|---|---|---|---|---|---|
| WO 2011097956 | A1 | 18-08-2011 | CN 101780412 A | | 21-07-2010 |
| | | | WO 2011097956 A1 | | 18-08-2011 |
| WO 2009087040 | A2 | 16-07-2009 | DE 102008004135 A1 | | 23-07-2009 |
| | | | EP 2231329 A2 | | 29-09-2010 |
| | | | TW 200948478 A | | 01-12-2009 |
| | | | WO 2009087040 A2 | | 16-07-2009 |
| DE 102006007147 | A1 | 23-08-2007 | CN 101384358 A | | 11-03-2009 |
| | | | DE 102006007147 A1 | | 23-08-2007 |
| | | | EP 1986775 A2 | | 05-11-2008 |
| | | | JP 2009526726 A | | 23-07-2009 |
| | | | KR 20080094690 A | | 23-10-2008 |
| | | | SG 169994 A1 | | 29-04-2011 |
| | | | TW 200800392 A | | 01-01-2008 |
| | | | US 2008003169 A1 | | 03-01-2008 |
| | | | WO 2007093337 A2 | | 23-08-2007 |
| DE 102005032071 | A1 | 11-01-2007 | DE 102005032071 A1 | | 11-01-2007 |
| | | | EP 1904231 A2 | | 02-04-2008 |
| | | | JP 2009500158 A | | 08-01-2009 |
| | | | KR 20080053461 A | | 13-06-2008 |
| | | | US 2009035208 A1 | | 05-02-2009 |
| | | | WO 2007006512 A2 | | 18-01-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007093337 A2

- US 20080233402 A1

**Non-patent literature cited in the description**

- **DE JONG.** *Catal. Rev. -Sci. Eng.,* 2000, vol. 42 (4), 481-510